# EUROPÄISCHE PATENTSCHRIFT

(11) **EP 4 204 704 B1**
(45) Veröffentlichungstag und Bekanntmachung des Hinweises auf die Patenterteilung: **10.07.2024**
(21) Anmeldenummer: 21758720.3
(22) Anmeldetag: 27.08.2021
(51) Int. Cl.: F16D 3/72, F16D 3/78

(54) **KUPPLUNG FÜR WINDKRAFTGETRIEBE, ANTRIEBSSTRANG, WINDKRAFTANLAGE UND INDUSTRIE-APPLIKATION**
COUPLING FOR WIND POWER TRANSMISSION, POWER TRAIN, WIND POWER PLANT AND INDUSTRIAL APPLICATION
EMBRAYAGE POUR UN ENGRENAGE POUR ÉOLIENNES, CHAINE CINÉMATIQUE ÉOLIENNE ET APPLICATION INDUSTRIELLE

(30) Priorität: 28.08.2020 EP 20193252
(43) Veröffentlichungstag der Anmeldung: 05.07.2023
(73) Patentinhaber: Flender GmbH, 46395 Bocholt (DE)
(72) Erfinder: FLASWINKEL, Daniel, 46395 Bocholt (DE); JANSEN, Andre, 46325 Borken (DE)
(74) Vertreter: Michalski Hüttermann & Partner Patentanwälte mbB
(86) Internationale Anmeldenummer: PCT/EP2021/073715
(87) Internationale Veröffentlichungsnummer: WO 2022/043484

(56) Entgegenhaltungen:
- DE-A1- 102005 047 305
- DE-U1- 29 623 369
- JP-A- 2010 065 724
- US-A- 2 238 380
- US-A- 3 124 342
- ANONYMOUS: "List of finite element software packages - Wikipedia", 12 August 2020 (2020-08-12), pages 1 - 9, XP055862007, Retrieved from the Internet <URL:https://en.wikipedia.org/w/index.php?title=List_of_finite_element_software_packages&oldid=972469110> [retrieved on 20211116]

## Beschreibung

Die Erfindung betrifft eine Kupplung, die zu einer mechanischen Anbindung eines Windkraftgetriebes geeignet ist. Die Erfindung betrifft ebenso einen Antriebsstrang, der in einer Windkraftanlage einsetzbar ist. Darüber hinaus betrifft die Erfindung eine Windkraftanlage, die über einen solchen Antriebsstrang verfügt, und eine entsprechende Industrie-Applikation.

Aus WO 2012/052022 A1 ist ein Getriebe für eine Windkraftanlage bekannt, das mit einem Generator verbunden ist. Das Getriebe ist als Planetengetriebe ausgebildet und ist antriebsseitig über eine Hauptwelle mit einem Rotor verbunden. Zur Verbindung der Hauptwelle mit dem Getriebe ist eine Kupplung vorgesehen, die in unterschiedlichen Bauformen ausgebildet sein kann.

Aus JP 2010 065724 A ist eine starre Kupplung zwischen zwei Wellen bekannt, bei der die jeweilige Welle über einen zugehörigen Wellenflansch mit jeweils einem separat ausgeführten Flansch verschraubt ist, wobei die Flansche wiederum mit einem separat ausgeführten Zwischenstück verschraubt sind. Das Zwischenstück weist nach radial außen geöffnete teilrohrförmige Taschen auf. Ein Teil der Taschen ist stirnseitig in axialer Richtung geschlossen, um dort die Verschraubung des Zwischenstücks mit den Flanschen zu realisieren. Die übrigen Taschen sind in axialer Richtung offen, um die Verschraubung der Flansche mit dem jeweils zugeordneten Wellenflansch zu ermöglichen.

Aus DE 10 2005 047305 A1 ist es bekannt zwei Naben jeweils über Lamellenpakete mit einem Zugehörigen Flansch zu verbinden, wobei die Flansche über eine Steckverzahnung in axialer Richtung relativ zueinander beweglich miteinander drehgekoppelt sind.

Aus DE 296 23 369 U1 ist eine Konusschraubverbindung für eine Lamellenpaket-Wellenkupplung bekannt.

Aus US 3 124 342 A eine Kupplung mit dem Oberbegriff des Anspruchs 1 bekannt.

In verschiedenen Gebieten des Maschinenbaus besteht Bedarf an Kupplungen, die eine zuverlässige Übertragung von Drehmoment zwischen drehenden Komponenten ermöglicht und dabei einen Ausgleich von Ungenauigkeiten in Positionierung und/oder Ausrichtung erlaubt. Ebenso werden eine einfache Montierbarkeit, Wartbarkeit und hohe Wirtschaftlichkeit angestrebt. Dies gilt insbesondere für die Windkraftanlagentechnik und Industrie-Applikationen, in denen häufig hohe Antriebsdrehmomente zu transportieren sind. Der Erfindung liegt die Aufgabe zugrunde, eine Kupplung bereitzustellen, die in zumindest einem der skizzierten Anforderungen eine Verbesserung bietet.

Die Aufgabenstellung wird durch eine Kupplung mit den Merkmalen des Anspruchs 1 gelöst. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Die Kupplung ist zu einem Anbinden eines Getriebes an eine Antriebswelle geeignet ausgebildet. Die Kupplung umfasst ein umlaufendes Zwischenstück, das insbesondere einen umlaufenden, im Wesentlichen röhrenförmigen, Grundkörper aufweisen kann. Das Zwischenstück weist einen antriebsseitigen Flansch und einen abtriebsseitigen Flansch auf, die sich insbesondere an den Grundkörper des Zwischenstücks anschließen können. Im montierten Zustand erfolgt ein Einleiten und Ausleiten von Antriebsdrehmoment in bzw. aus der Kupplung über den antriebsseitigen bzw. den abtriebsseitigen Flansch. Die Flansche sind dazu unmittelbar oder mittelbar mit der Antriebswelle bzw. dem Getriebe lösbar verbindbar.

Der abtriebsseitige Flansch ist mit dem antriebsseitigen Flansch über Längsstege axial bewegungsfest verbunden. Eine axiale Relativbewegung des abtriebsseitigen Flanschs zu dem antriebsseitigen Flansch kann durch die Längsstege verhindert werden. Die Längsstege gehören insbesondere zu von dem Zwischenstück ausgebildeten Taschen, wobei vorzugsweise in Umfangsrichtung nachfolgende Längsstege eine zwischen diesen Längsstegen ausgebildete Tasche in tangentialer Richtung beziehungsweise in Umfangsrichtung begrenzen können. Besonders bevorzugt kann der jeweilige Längssteg an seinen beiden im Wesentlichen in tangentialer Richtung weisenden Seiten, jeweils eine Seite unterschiedlicher in Umfangsrichtung nachfolgender Taschen begrenzen. Die Tasche kann in radialer Richtung von dem Grundkörper des Zwischenstücks begrenzt sein. Der Grundkörper kann insbesondere einen in Umfangsrichtung rohrförmig geschlossenen Ring aufweisen, der für alle Taschen eine Grundseite ausbilden kann. Dadurch ist es möglich, dass die speichenartig angeordneten Längsstege und der rohrförmige Grundkörper zusammen mit den Flanschen eine Vielzahl von in Umfangsrichtung hintereinander angeordneten Taschen ausformen können.

Die Flansche sind insbesondere im Wesentlichen umlaufend ausgebildet. Der antriebsseitige Flansch und/oder der abtriebsseitige Flansch kann insbesondere eine konstanten Außendurchmesser aufweisen. Das heißt der Außendurchmesser des Flanschs ist bei jedem Umfangswinkel im Wesentlichen gleich groß. Vorzugsweise ist der antriebsseitige Flansch und/oder der abtriebsseitige Flansch als kreisförmige Scheibe oder Kreisring ausgestaltet. Die Flansche sind an ihren Axialseiten insbesondere flach und/oder eben ausgeführt. Vorzugsweise ist der Außendurchmesser des Flanschs um ein Vielfaches größer als seine Materialdicke in axialer Richtung entlang der Hauptdrehachse der Kupplung.

Die Längsstege erstrecken sich im Wesentlichen in eine Axialrichtung. Die Axialrichtung ist hierbei parallel zu einer Hauptdrehachse der Kupplung. Die Längsstege können auch eine Erstreckung in radialer Richtung aufweisen, insbesondere zur Begrenzung der Tasche. Die Längsstege können eine Materialstärke in tangentialer Richtung aufweisen, die geringer als die Erstreckung des Längsstegs in axialer Richtung sowie in radialer Richtung ist. Die Längsstege können vollständig in Axialrichtung ausgerichtet sein, oder in Art einer Schrägverzahnung eine Schrägstellung aufweisen, so dass die im Wesentlichen radiale Erstreckung des Längsstegs insbesondere um wenige Winkelgrade zur Radialrichtung und/oder Axialrichtung angeschrägt sein kann. Die Längsstege können im Wesentlichen radial nach außen weisend ausgebildet sein.

Zudem ist der jeweilige Längssteg einstückig mit dem antriebsseitigen Flansch und mit dem abtriebsseitigen Flansch ausgestaltet. Die Längsstege können einstückig mit dem Grundkörper des Zwischenstücks ausgebildet sein, insbesondere um einen fugenlosen Übergang von den Längsstegen mit einer die Tasche in radialer Richtung begrenzenden Grundseite des Grundkörpers auszubilden. Das Zwischenstück ist dadurch beispielsweise als Gussteil herstellbar und dementsprechend kosteneffizient herstellbar. Insbesondere ist eine gute Entformbarkeit erzielbar.

Der jeweilige Längssteg ist einteilig oder zweiteilig ausgestaltet. Wenn der Längssteg einteilig ausgestaltet ist, können der antriebsseitige Flansch, der abtriebsseitige Flansch, die Längsstege und der gegebenenfalls zur Ausbildung einer Grundseite der Tasche vorgesehene Grundkörper in einem einzigen einteiligen Zwischenstück einstückig kostengünstig zusammengefasst sein. Wenn die Längsstege zweiteilig ausgestaltet sind, ist es möglich die Längsstege und den gegebenenfalls zur Ausbildung einer Grundseite der Tasche vorgesehene Grundkörper in axialer Richtung im Wesentlichen mittig zu teilen und eine mittige Teilungsebene für das Zwischenstück vorzusehen. Der jeweilige Teil des dann zweiteilig ausgeführten Zwischenstücks kann symmetrisch, insbesondere spiegelbildlich, vorzugsweise identisch, zum anderen Teil ausgestaltet sein. Der jeweilige Teil des Zwischenstücks kann dadurch kostengünstig als Gussteil mit einer Entformungsrichtung, die der Axialrichtung und der Hauptdrehachse im montierten Zustand entspricht, ausgestaltet sein. Das Zwischenstück kann dadurch besonders kostengünstig und einfach hergestellt werden. Die beiden Teile des Zwischenstücks können mit geeigneten Befestigungsmitteln in axialer Richtung axial zueinander unbeweglich zusammengehalten und befestigt werden.

Durch die Längsstege wird in gewichtssparender Weise eine Steigerung der Torsionssteifigkeit des Zwischenstücks erzielt. Die so erreichte Gewichtsersparnis erleichtert wiederum eine Montage der erfindungsgemäßen Kupplung. Die Kupplung ist auch dazu geeignet, zwischen anderen Komponenten als einer Antriebswelle und einem Getriebe angeordnet zu werden. Die technischen Vorzüge der erfindungsgemäßen Kupplung sind damit auch in weiteren Anwendungsfällen nutzbar.

Insbesondere ist vorgesehen, dass der Längssteg oder ein antriebsseitiger Teil des Längsstegs an einer auf den abtriebsseitigen Flansch zu weisenden antriebsseitigen Flanschseite des antriebsseitigen Flanschs über in Umfangsrichtung verlaufende Übergangsrundungen in den antriebsseitigen Flansch übergeht und/oder der Längssteg oder ein abtriebsseitiger Teil des Längsstegs an einer auf den antriebsseitigen Flansch zu weisenden abtriebsseitigen Flanschseite des abtriebsseitigen Flanschs über in Umfangsrichtung verlaufende Übergangsrundungen in den abtriebsseitigen Flansch übergeht. Die Übergangsrundungen erleichtern eine Lastverteilung und einen Kraft- beziehungsweise Momentverlauf zwischen dem jeweiligen Längssteg mit dem zugehörigen Flansch. Die Stabilität und Festigkeit ist dadurch verbessert und Kerbwirkungseffekte vermieden oder zumindest reduziert. Gleichzeitig erleichtert die jeweilige Übergangsrundung eine Entformung des Zwischenstücks nach einem Gießprozess. Vorzugsweise ist die jeweilige Übergangsrundung eine gerundete Fortführung einer an dem Längssteg und/oder dem einstückig angebundenen Flansch vorgesehenen Entformungsschräge. Die Übergangsrundung kann insbesondere stetig differenzierbar in die Entformungsschräge nahezu absatzlos und kantenfrei übergehen.

Vorzugsweise geht der Längssteg radial außen im Wesentlichen absatzlos in den antriebsseitigen Flansch und/oder in den abtriebsseitigen Flanschs über. Ein radialer Versatz zwischen einer radial äußeren Mantelfläche des Flanschs und einer nach radial außen weisenden Stegfläche kann vermieden werden. Die radial äußere Mantelfläche des Flanschs und die nach radial außen weisenden Stegfläche können auf einem gemeinsamen Radius zur Hauptdrehachse vorgesehen sein. Die Stabilität und Festigkeit ist dadurch verbessert und Kerbwirkungseffekte vermieden oder zumindest reduziert.

In einer Ausführungsform der beanspruchten Kupplung werden durch den umlaufenden Grundkörper des Zwischenstücks, den antriebsseitigen Flansch, den abtriebsseitigen Flansch und Längsstege offene Taschen gebildet, wobei die offenen Taschen bezogen auf die Hauptdrehachse der Kupplung in eine radial äußere Richtung geöffnet sind. Durch die Taschen wird eine erhöhte Torsionssteifigkeit bereitgestellt und gleichzeitig Materialanhäufungen in einem radial äußeren Bereich vermieden. Hierdurch wiederum wird eine Rotationsträgheit der Kupplung gegenüber einer Massivbauweise reduziert. Die Taschen erlauben auch eine vereinfachte Montage, da bei einem Hineinfallen von Befestigungsmitteln oder Werkzeugen ins Innere der Kupplung verhindert wird. Auch dadurch wird die Montage der beanspruchten Kupplung vereinfacht. Zusätzlich oder alternativ können die Taschen auch nach radial nach innen offen ausgebildet sein. Die Taschen weisen beispielsweise einen U-förmigen oder H-förmigen Querschnitt auf. Insbesondere ist die jeweilige Tasche durch die in Umfangsrichtung nachfolgenden Längsstege in radialer Richtung zumindest in einem Teilbereich gerade ausgeführt. Ein teilkreisförmiger Querschnitt für die Tasche ist vermieden, so dass die Längsstege bei einem geringen Abstand in Umfangsrichtung eine Positionierung der Grundfläche der Tasche auf einem geringen Radius zu der Hauptdrehachse nicht beeinträchtigen. Bei einem geringen Massenträgheitsmoment des Zwischenstücks kann durch eine hohe Anzahl an Längsstegen eine besonders hohe Torsionssteifigkeit erreicht werden.

Des Weiteren können der antriebsseitige Flansch und/oder der abtriebsseitige Flansch jeweils mit einem Lamellenpaket verbunden sein. Durch den Einsatz von mindestens einem Lamellenpaket wird in der Kupplung eine Ausgleichfähigkeit bereitgestellt, um zwischen einer Antriebsseite und einer Abtriebsseite der Kupplung einen Radialversatz, einen Axialversatz und/oder Winkelversatz, also eine Schrägstellung, auszugleichen. Insbesondere bei Einsatz von je einem Lamellenpaket am antriebsseitigen Flansch und am abtriebsseitigen Flansch wird eine erhöhte Ausgleichsfähigkeit erreicht. Die Ausgleichsfähigkeit, also der maximal ausgleichbare Radialversatz, Axialversatz und/oder Winkelversatz, wird im Wesentlichen durch die Lamellenpakete definiert. Aufgrund der Torsionssteifigkeit des Zwischenstücks ist dieses bei der Ermittlung der Ausgleichsfähigkeit vernachlässigbar. Die beanspruchte Kupplung ist so in Anwendungsgebieten einsetzbar, in denen das Ausgleichsverhalten verlangt wird. Des Weiteren werden Lamellenkupplungen im Betrieb im Wesentlichen auf Zug in Tangentialrichtung beansprucht, woraus auch eine erhöhte Lebensdauer der Kupplung resultiert. Die Lamellenpakete sind ferner in einem montierten Zustand der Kupplung zerstörungsfrei herausnehmbar und dadurch in einfacher Weise kosteneffizient austauschbar. Die beanspruchte Kupplung vereinfacht damit den Betrieb einer Anwendung, in der hohe mechanische Beanspruchungen vorliegen, sowie deren Wartung, beispielsweise in Windkraftanlagen. Darüber hinaus können die Lamellen als Segmentlamellen ausgebildet sein, die zu einem umlaufenden Lamellenpaket zusammensetzbar sind. Derartige Segmentlamellen sind beispielsweise in EP 3 719 335 A1 (Anmeldenummer EP 19 166 941.5) beschrieben. Der Offenbarungsgehalt von EP 3 719 335 A1 wird durch Verweisung in die vorliegende Anmeldung mit einbezogen.

Erfindungsgemäß weisen der antriebsseitige und der abtriebsseitige Flansch gegenüberliegende Ausnehmungen auf, die zu einem Aufnehmen von lösbaren Befestigungsmitteln ausgebildet sind. Durch die lösbaren Befestigungsmittel sind beispielsweise die Lamellenpakete jeweils am antriebsseitigen bzw. abtriebsseitigen Flansch befestigbar. Derartige Ausnehmungen sind in einfacher Weise durch Bohren mit erhöhter Präzision herstellbar. Insbesondere können die Taschen derartig dimensioniert sein, dass die Befestigungsmittel darin einlegbar sind und durch axiales Bewegen in den antriebsseitigen bzw. abtriebsseitigen Flansch einsteckbar sind. Dadurch wird die Montage, und damit auch die Wartung, der beanspruchten Kupplung weiter vereinfacht. Darüber hinaus können der antriebsseitige und/oder abtriebsseitige Flansch im Bereich der Ausnehmungen derart ausgebildet sein, dass ein axialer Abstand zwischen dem Lamellenpaket und dem antriebsseitigen bzw. abtriebsseitige Flansch minimiert ist. Dazu kann der Flansch im Bereich der Ausnehmung beispielsweise eine erhöhte Wandstärke aufweisen. Hierdurch wird eine freie Biegelänge des Befestigungsmittels, mit dem das Lamellenpaket am antriebsseitigen bzw. abtriebsseitigen Flansch befestigt ist, verringert. Dies erlaubt es, die Tragfähigkeit des Befestigungsmittels weiter auszuschöpfen.

In einer weiteren Ausführungsform der beanspruchten Kupplung können der antriebsseitige und/oder abtriebsseitige Flansch Ausnehmungen aufweisen, die eine Handhabung von lösbaren Befestigungsmitteln erlauben, die unmittelbar mit einem Anschlussflansch verbunden sind, der jeweils auch von der beanspruchten Kupplung umfasst ist. Unter einem Anschlussflansch ist dabei ein Flanschstück zu verstehen, das auch mit einem Lamellenpaket verbunden ist. Ein Lamellenpaket kann dazu beispielsweise, in Umlaufrichtung betrachtet, alternierend über lösbare Befestigungsmittel mit dem Zwischenstück und einem Anschlussflansch verbunden sein. Dementsprechend kann die Kupplung einen antriebsseitigen und/oder abtriebsseitigen Anschlussflansch aufweisen. Der antriebsseitige Anschlussflansch ist im montierten Zustand unmittelbar mit der Rotorwelle verbunden und der abtriebsseitige Anschlussflansch unmittelbar mit dem Getriebe, also dessen Eingangswelle, verbunden. Die Ausnehmungen im antriebsseitigen bzw. abtriebsseitigen Flansch erlauben es, lösbare Befestigungsmittel hindurchzuführen, durch die der entsprechende Anschlussflansch mit dem jeweiligen Lamellenpaket lösbar verbindbar ist. Dadurch wird die Montage der beanspruchten Kupplung weiter vereinfacht, wodurch insbesondere die Montage einer Windkraftanlage beschleunigt wird.

Erfindungsgemäß umfasst das zumindest eine lösbare Befestigungsmittel, durch das Zwischenstück mit dem Lamellenpaket verbunden ist, einen Bolzen, der zumindest abschnittsweise konisch ausgebildet ist. Durch die zumindest abschnittsweise konische Form ist eine eindeutige Montagerichtung des Bolzens vorgebbar und ein stabiler Sitz des lösbaren Befestigungsmittels erreichbar. Darüber hinaus wird ein Durchgleiten den Bolzen, und damit ein Hineinfallen in einen schwer zugänglichen Bereich vermieden. Dadurch wird der Montagevorgang fehlersicher gestaltet, und somit auch beschleunigt. Die Ausnehmungen, in denen der zumindest abschnittsweise konische Bolzen aufgenommen ist, sind korrespondierend dazu ausgebildet. Alternativ oder ergänzend können auch die Befestigungsmittel, die die Lamellenpakete mit den jeweiligen Anschlussflanschen verbinden, einen zumindest abschnittsweise konischen Bolzen umfassen. Dementsprechend können die Anschlussflansche jeweils Ausnehmungen aufweisen, die korrespondierend zu den zumindest teilweise konischen Bolzen ausgebildet sind.

Darüber hinaus kann der zumindest abschnittsweise konische Bolzen, durch den das Zwischenstück mit einem Lamellenpaket verbunden ist, in eine axial äußere Richtung montierbar ausgebildet sein. Dazu ist der zumindest teilweise konische Bolzen in eine Tasche einbringbar und in eine axial äußere Richtung zu bewegen. Unter einer axial äußeren Richtung ist von einem mittleren Bereich des Zwischenstücks aus gesehen eine Bewegung zur Antriebsseite und zur Abtriebsseite hin zu verstehen. Alternativ oder ergänzend kann ein zumindest teilweise konischer Bolzen, durch den ein Anschlussflansch mit dem jeweiligen Lamellenpaket verbindbar ist, in eine axial innere Richtung montierbar ausgebildet sein. Die Anschlussflansch sind in der beanspruchten Kupplung jeweils in einem axialen Randbereich angeordnet und von außen in Axialrichtung zugänglich. Auch hierdurch wird die Montage der beanspruchten Kupplung vereinfacht.

Die Kupplung kann auch, wie bereits skizziert, einen antriebsseitigen Anschlussflansch und/oder einen abtriebsseitigen Anschlussflansch aufweisen. Diese können jeweils drehmomentübertragend mit dem Zwischenstück verbunden sein, indem diese mit einem Lamellenpaket verbunden sind. Der antriebsseitige bzw. abtriebsseitige Anschlussflansch kann in einem Abschnitt, der einem lösbaren Befestigungsmittel gegenüberliegt, mit dem das entsprechende Lamellenpaket mit dem Zwischenstück verbunden ist, eine erste Wandstärke aufweisen. Die erste Wandstärke ist dabei reduziert gegenüber einer zweiten Wandstärke in benachbarten Abschnitten, in denen ein lösbares Befestigungsmittel aufgenommen ist, die den jeweiligen Anschlussflansch mit dem entsprechenden Lamellenpaket verbinden. Auch hierdurch wird im Bereich der ersten Wandstärke lichter Raum bereitgestellt, der eine Montage von Befestigungskomponenten wie Muttern für Bolzen, insbesondere zumindest abschnittsweise konische Bolzen, vereinfacht und dort eine Verlagerungsfähigkeit gewährleistet. Die Abschnitte mit der ersten und zweiten Wandstärke sind umlaufend und alternierend angeordnet. Hierdurch wird die Wartungsfreundlichkeit der beanspruchten Kupplung weiter gesteigert.

In einer weiteren Ausführungsform der beanspruchten Kupplung kann diese eine Torsionssteifigkeit von 1200MNm/rad bis 2200MNm/rad, vorzugsweise von 1500MNm/rad bis 1800MNm/rad aufweisen. Kupplungen mit derartigen Torsionssteifigkeiten weisen gemäß Bauformen aus dem Stand der Technik ein verhältnismäßig hohes Gewicht auf und sind aufwendig in der Montage, Wartung und Demontage. Die beanspruchte Kupplung ist aufgrund ihrer Torsionssteifigkeit für die Verwendung in Windkraftanlagen geeignet, beispielsweise zur Verbindung eines Getriebes oder Generatorgetriebes mit einer Rotorwelle der Windkraftanlage. Ebenso ist die beanspruchte Kupplung besonders kompakt und weist einen Außendurchmesser von 1300mm bis 2300mm, vorzugsweise von 1600mm bis 2000mm auf.

Die zugrundeliegende Aufgabenstellung wird auch durch einen erfindungsgemäßen Antriebsstrang gelöst, der zum Einsatz in einer Windkraftanlage ausgebildet ist. Der Antriebsstrang umfasst eine Rotorwelle, über die eine Drehung eines Mehrblattrotors übertragbar ist, einen Generator, ein Getriebe und eine Kupplung. Durch die Kupplung ist die Rotorwelle mit dem Getriebe drehmomentübertragend verbunden. Das Getriebe und der Generator können als separate Komponenten ausgebildet sein, oder in einem Generatorgetriebe integriert ausgebildet sein. Erfindungsgemäß ist die Kupplung nach einer der oben skizzierten Ausführungsformen ausgebildet. Durch den Einsatz der erfindungsgemäßen Kupplung im Antriebsstrang wird dessen Montage und Wartung in besonderem Maß erleichtert.

Ebenso wird die Aufgabenstellung durch eine erfindungsgemäße Windkraftanlage gelöst. Die Windkraftanlage umfasst eine Gondel, der der drehbar ein Mehrblattrotor angeordnet ist, der drehmomentübertragend mit einer Rotorwelle verbunden ist. Die Rotorwelle gehört zu einem Antriebsstrang, der erfindungsgemäß nach einer der oben dargestellten Ausführungsformen ausgebildet ist.

Des Weiteren wird die eingangs beschriebene Aufgabe ebenso durch eine erfindungsgemäße Industrie-Applikation gelöst. Die Industrie-Applikation umfasst eine Antriebseinheit, die über eine Kupplung drehmomentübertragend mit einer Abtriebseinheit verbunden ist. Durch die Antriebseinheit wird eine Antriebsleistung in die Kupplung eingeleitet und auf die Antriebseinheit übertragen. Die Antriebseinheit kann beispielsweise als Elektromotor, Verbrennungsmotor oder Hydraulikmotor ausgebildet sein. Durch die Antriebseinheit wird über eine Ausgangswelle eine Antriebsleistung bereitgestellt, die zur Abtriebseinheit zu übertragen ist. Die Antriebseinheit kann beispielsweise als Mühle, Vertikalmühle, Zuckermühle, Zementmühle, Gesteinsbrecher, Förderband, Pumpe, Rollenpresse, Plattenband, Rohrmühle, Drehrohrofen, Drehwerk, Rührwerk, Hubvorrichtung, Müllpresse oder Schrottpresse ausgebildet sein. Die Abtriebseinheit weist hierzu eine Eingangswelle auf, die über eine Kupplung mit der Ausgangswelle der Antriebseinheit verbunden ist. Die Kupplung ist erfindungsgemäß nach einer der oben skizzierten Ausführungsformen ausgebildet.

Ebenso wird die skizzierte Aufgabenstellung durch ein nicht beanspruchtes Computerprogrammprodukt gelöst, das zu Simulation eines Betriebsverhaltes einer Kupplung ausgebildet ist. Unter dem Betriebsverhalten ist beispielweise ein Ausgleichsverhalten, also ein Biegeverhalten, eines Lamellenpaket zu verstehen. Auch eine Kinematik und/oder eine Schwingungscharakteristik der Kupplung können mittels des Computerprogrammprodukts simuliert werden. Das Betriebsverhalten der Kupplung ist dadurch in einem montierten Zustand in einem Antriebsstrang in einer Windkraftanlage simulierbar. Die Kupplung ist dementsprechend in ihrem physikalischen Verhalten im erfindungsgemäßen Computerprogrammprodukt abgebildet und kann mit einer Datenschnittstelle versehen sein, durch die weitere simulationsgerichtete Computerprogrammprodukte Eingabewerte an das erfindungsgemäße Computerprogrammprodukt weitergeben können. Gleichermaßen kann das Computerprogrammprodukt auch mit einer Datenschnittstelle zu einem Weitergeben von Ausgabewerten des erfindungsgemäßen Computerprogrammprodukts an weitere simulationsgerichtete Computerprogrammprodukte versehen sein. Das Computerprogrammprodukt kann als sogenannter Digitaler Zwilling ausgebildet sein. Derartige Digitalen Zwillinge sind beispielsweise in der Offenlegungsschrift US 2017/286572 A1 dargestellt. Der Offenbarungsgehalt von US 2017/286572 A1 wird durch Verweisung in die vorliegende Anmeldung mit einbezogen. Die Kupplung, die durch das beanspruchte Computerprogrammprodukt simulierbar ist, ist gemäß einer der oben skizzierten Ausführungsformen ausgebildet.

Die Erfindung wird im Folgenden anhand einzelner Ausführungsformen in Figuren näher erläutert. Die Figuren sind insoweit in gegenseitiger Ergänzung zu lesen, dass gleiche Bezugszeichen in unterschiedlichen Figuren die gleiche technische Bedeutung haben. Die Merkmale der einzelnen Ausführungsformen sind untereinander auch kombinierbar. Ferner sind die in den Figuren gezeigten Ausführungsformen mit den oben skizzierten Merkmalen kombinierbar. Es zeigen im Einzelnen:
- FIG 1: schematisch eine Ausführungsform der beanspruchten Kupplung in einer Schrägansicht;
- FIG 2: die Ausführungsform der beanspruchten Kupplung in einer Schrägansicht in einem ersten Längsschnitt;
- FIG 3: die erste Ausführungsform der beanspruchten Kupplung in einer Schrägansicht in einem zweiten Längsschnitt;
- FIG 4: schematisch den Aufbau einer Ausführungsform der beanspruchten Windkraftanlage;
- FIG 5: schematisch den Aufbau einer Ausführungsform der beanspruchten Industrie-Applikation.

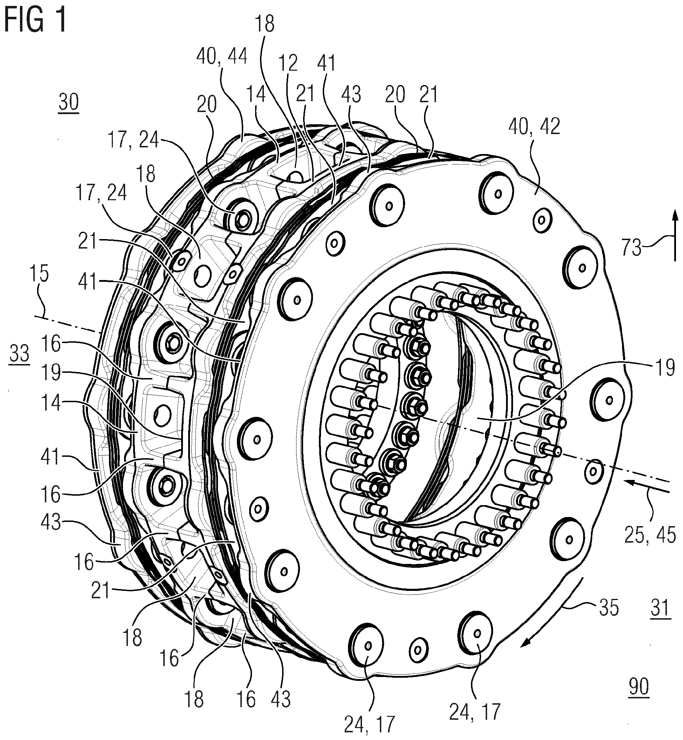

In FIG 1 ist schematisch eine Ausführungsform der beanspruchten Kupplung 30 in einer Schrägansicht dargestellt. Die Kupplung 30 umfasst zwei Lamellenpakete 20, die beidseitig, also auf einer Antriebsseite 31 und einer Abtriebsseite 33, an einem Zwischenstück 10 lösbar befestigt sind. An den Lamellenpaketen 20 ist auf einer Antriebsseite 31 und einer Abtriebsseite 33 jeweils ein Anschlussflansch 40 angeordnet. Über einen antriebsseitigen Anschlussflansch 42 wird eine Antriebsleistung 25 um eine Hauptdrehachse 15 der Kupplung 30 zugeführt. Die Antriebsleistung 25 wird ferner über einen abtriebsseitigen Anschlussflansch 44 aus der Kupplung 30 abgeführt. Der antriebsseitige und der abtriebsseitige Anschlussflansch 42, 44 sind ebenfalls lösbar jeweils mit einem Lamellenpaket 20 verbunden. Das Zwischenstück 10 umfasst einen umlaufenden Grundkörper 19, der im Wesentlichen röhrenförmig ausgebildet ist. Der Grundkörper 19 ist einstückig mit einem antriebsseitigen Flansch 12 und einem abtriebsseitigen Flansch 14 ausgebildet, die auch jeweils umlaufend ausgebildet sind. Der antriebsseitige und der abtriebsseitige Flansch 12, 14 des Zwischenstücks 10 weisen jeweils Ausnehmungen 17 auf, die zu einem Aufnehmen von lösbaren Befestigungsmitteln 24 ausgebildet sind. Über die Befestigungsmitteln 24 in den Ausnehmungen 17 im antriebsseitigen bzw. abtriebsseitigen Flansch 12, 14 sind diese mit dem jeweiligen Lamellenpaket 20 lösbar verbunden.

An den umlaufenden Grundkörper 19 des Zwischenstücks 10 sind auch Längsstege 16 einstückig angeformt, die im Wesentlichen rippenförmig ausgebildet sind. Die Längsstege 16 erstrecken sich im Wesentlichen entlang parallel zur Hauptdrehachse 15 und stellen jeweils eine belastungsübertragende Verbindung zwischen dem antriebsseitigen Flansch 12 und dem abtriebsseitigen Flansch 14 her. Dadurch sind jeweils zwischen zwei Längsstegen 16, dem antriebsseitigen Flansch 12, dem abtriebsseitigen Flansch 14 und dem umlaufenden Grundkörper 19 mehrere Taschen 18 ausgebildet. Die Taschen 18 sind dementsprechend umlaufend am Zwischenstück 10 angeordnet. Die Längsstege 16 stellen eine Versteifung gegen Torsionsbeanspruchung des Zwischenstücks 10 dar. Durch die Taschen 18 ist das Zwischenstück 10 relativ leicht und gleichzeitig steif gegen Torsionsbeanspruchungen zwischen dem antriebsseitigen und dem abtriebsseitigen Flansch 12, 14. Die Befestigungsmittel 24, die zum lösbaren Befestigen an einem der Lamellenpakete 20 zu montieren sind, sind in die Taschen 18 in eine Radialrichtung 37 einlegbar und im Wesentlichen durch eine Axialbewegung, also entlang der Hauptdrehachse 15, montierbar. Ein Hineinfallen in das schwer zugängliche Innere des Zwischenstücks 10 wird so vermieden. Eine Montage der Kupplung 30 wird dadurch vereinfacht und beschleunigt. Des Weiteren weisen der antriebsseitige und der abtriebsseitige Flansch 12, 14 in einem Bereich, der frei von Befestigungsmitteln 24 ist, eine erste Wandstärke 41 auf, und in einem Bereich mit einem lösbaren Befestigungsmittel 24 eine zweite Wandstärke 43. Die erste Wandstärke 41 ist dabei geringer als die zweite Wandstärke 43. Die zweite Wandstärke 43 bietet damit einem Befestigungsmittel 24, das eine lösbare Verbindung zwischen dem Zwischenstück 10 und einem der Lamellenpakete 20 herstellt, eine steife Aufnahme. Je höher die zweite Wandstärke 43 ist, umso belastbarer ist der antriebsseitige bzw. abtriebsseitige Flansch 12, 14 in diesem Bereich, um die Beanspruchung aufzunehmen, die dadurch hervorgerufen wird, dass ein auf das Zwischenstück 10 einwirkenden Antriebsleistung 25 im jeweiligen Lamellenpaket 20 in eine Zugbeanspruchung umgesetzt wird. Die Bereiche des antriebsseitigen bzw. abtriebsseitigen Flansches 12, 14, die frei von lösbaren Befestigungsmitteln 24 sind, sind durch die erste Wandstärke 41 gewichtssparend ausgebildet. Durch die alternierende Anordnung von Bereichen mit der ersten und der zweiten Wandstärke 41, 43 am antriebsseitigen und abtriebsseitigen Flansch 12, 14 des Zwischenstücks 10 ist dieses beanspruchungsgerecht ausgebildet, was eine höhere Materialausnutzung erlaubt.

Korrespondierend zum antriebsseitigen und abtriebsseitigen Flansch 12, 14 des Zwischenstücks 10 sind auch der antriebsseitige Anschlussflansch 42 und der abtriebsseitige Anschlussflansch 44 mit Bereichen ausgebildet, die alternierend eine erste und eine zweite Wandstärke 41, 43 aufweisen. Der antriebsseitige und abtriebsseitige Anschlussflansch 42, 44 sind jeweils mit Ausnehmungen 17 zum Aufnehmen von lösbaren Befestigungsmitteln 24 ausgebildet. Über die Befestigungsmittel 24, die im antriebsseitigen bzw. abtriebsseitigen Anschlussflansch 42, 44 aufgenommen sind, werden diese jeweils mit einem der Lamellenpakete 20 verbunden. Die lösbaren Befestigungsmittel 24, die in den Anschlussflanschen 42, 44 und in den Flanschen 12, 14 des Zwischenstücks 10 aufgenommen sind, sind umlaufend alternierend angeordnet, wodurch eine belastungsgerechte Beanspruchungsverteilung für die Lamellenpakete 20 ergibt. Eine Umlaufrichtung ist in FIG 1 durch den Pfeil 35 versinnbildlicht. Bereiche der Anschlussflansche 42, 44 mit einer ersten Wandstärke 41 sind gegenüber von Bereichen eines Flansches 12, 14 des Zwischenstücks 10 angeordnet, die die zweite Wandstärke 43 aufweisen. Korrespondierend sind Bereiche der Anschlussflansche 42, 44 mit der zweiten Wandstärke 43 sind gegenüber von Bereichen eines Flansches 12, 14 des Zwischenstücks 10 angeordnet, die die erste Wandstärke 41 aufweisen. Analog zum Zwischenstück 10, werden in den Anschlussflanschen 42, 44 so lösbare Befestigungsmittel 24 stabil in Bereichen mit der zweiten Wandstärke 43 aufgenommen und die Bereiche dazwischen sind durch die erste Wandstärke 41 gewichtssparend ausgebildet. Ferner wird durch die erste Wandstärke 41 am Zwischenstück 10 und korrespondierend am antriebsseitigen bzw. abtriebsseitigen Flansch 42, 44 ein lichter Raum 21 bereitgestellt, der zum Aufnehmen eines nicht gezeigten Montagewerkzeugs geeignet ist. Neben der Gewichtsersparnis bietet die erste Wandstärke 41 an den Flanschen 12, 14 des Zwischenstücks 10 und dem antriebsseitigen bzw. abtriebsseitigen Anschlussflansch 42, 44 einen lichten Raum 21, der die Montage der Kupplung 30 weiter vereinfacht.

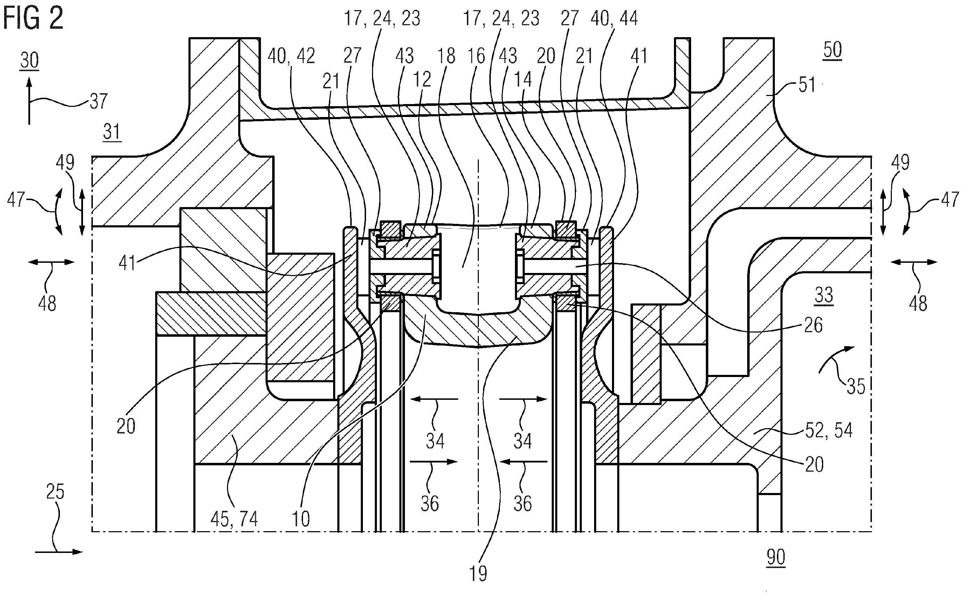

Die Ausführungsform gemäß FIG 1 ist in FIG 2 in einer detaillierten Ansicht im Längsschnitt dargestellt. In FIG 2 ist die dargestellte Kupplung 30 mit einer Rotorwelle 74 verbunden, die als Antriebswelle 45 dient, über die der Kupplung 30 Antriebsleistung 35 auf einer Antriebsseite 31 zuführbar ist. Auf einer Abtriebsseite 33 ist die Kupplung 30 mit einer Nabe 54 verbunden, die zu einem Getriebe 50, insbesondere einem Planetengetriebe, gehört und im Getriebe 50 als Eingangswelle 52 dient. Die Kupplung 30 ist durch die Lamellenpakete 20 dazu ausgebildet, einen Winkelversatz 47 zwischen dem antriebsseitigen Anschlussflansch 42 und dem abtriebsseitigen Anschlussflansch 44 auszugleichen. Der Winkelversatz 47 ist dabei im Wesentlichen als eine Kippbewegung im Wesentlichen entlang des in FIG 2 skizzierten gebogenen Doppelpfeils 47 zu verstehen. Ebenso ist die Kupplung 30 durch die Lamellenpakete 20 dazu geeignet, einen Axialversatz 48 und/oder einen Radialversatz 49 auszugleichen. Im Längsschnitt nach FIG 2 ist erkennbar, dass die lösbaren Befestigungsmittel 24, die eine Verbindung zwischen einem antriebsseitigen bzw. abtriebsseitigen Flansch 12, 14 des Zwischenstücks 10 und dem jeweiligen Lamellenpaket 20 herstellen, je einen Bolzen 23 umfassen, der zumindest abschnittsweise konisch ausgebildet ist. Die zumindest abschnittsweise konische Form der Bolzen 23 führt dazu, dass die Bolzen 23 nur in eine axial äußere Richtung 34 montierbar sind. Die Ausnehmungen 17, in denen die Bolzen 23 aufgenommen sind korrespondierend zum jeweiligen Bolzen 23 auch zumindest abschnittsweise konisch ausgebildet. Die axial äußere Richtung 34 und korrespondierend eine axial innere Richtung 36 sind im Wesentlichen auf einen mittleren Bereich eines Längsstegs 16 bzw. einer Tasche 18 am Zwischenstück 10 bezogen. Die Tasche 18 vermeidet bei einer Montage der Befestigungsmittel 24, insbesondere des Bolzens 24, ein Hineinfallen in das Innere der Kupplung 30. Die Tasche 18 ist ferner zu einem Aufnehmen eines nicht näher gezeigten Werkzeugs ausgebildet, mit dem eine Schraube 26 anziehbar bzw. lösbar ist. Die Bolzen 23 sind hohl und dazu ausgebildet, zumindest eine Schraube 26 aufzunehmen, die mit einem Gegenstück 27 verbindbar ist. Durch ein Anziehen der jeweiligen Schraube 26 ist das entsprechende Lamellenpaket 20 mit dem Zwischenstück 10, also dessen antriebsseitigen bzw. abtriebsseitigen Flansch 12, 14 verspannbar. Durch die zumindest abschnittsweise konische Form der jeweiligen Bolzen 23 wird ein exakter und belastbarer Sitz des Befestigungsmittels 24 erzielt. Dadurch, dass an den Anschlussflanschen 40, 42, 44 im Umlaufrichtung 35 alternierend eine erste und zweite Wandstärke 41, 43 ausgebildet ist, wie auch in FIG 1 zu erkennen, wird durch Bereiche mit der ersten Wandstärke 41 jeweils ein lichter Raum 21 ausgebildet. Das Gegenstück 27, das zum jeweiligen Befestigungsmittel 24 zu zählen ist, ist durch den so bereitgestellten lichten Raum 21 in einfacher Weise montierbar. Die Kupplung 30 ist ferner in einem Computerprogrammprodukt 90 abgebildet, da dazu ausgebildet ist, ein Betriebsverhalten der Kupplung 30 zu simulieren. Zum Betriebsverhalten der Kupplung 30 gehört unter anderem ein zeitlicher Verlauf der übertragenen Antriebsleistung 25 und/oder der eintretende Winkelversatz 47, der Axialversatz 48 und/oder der Radialversatz 49.

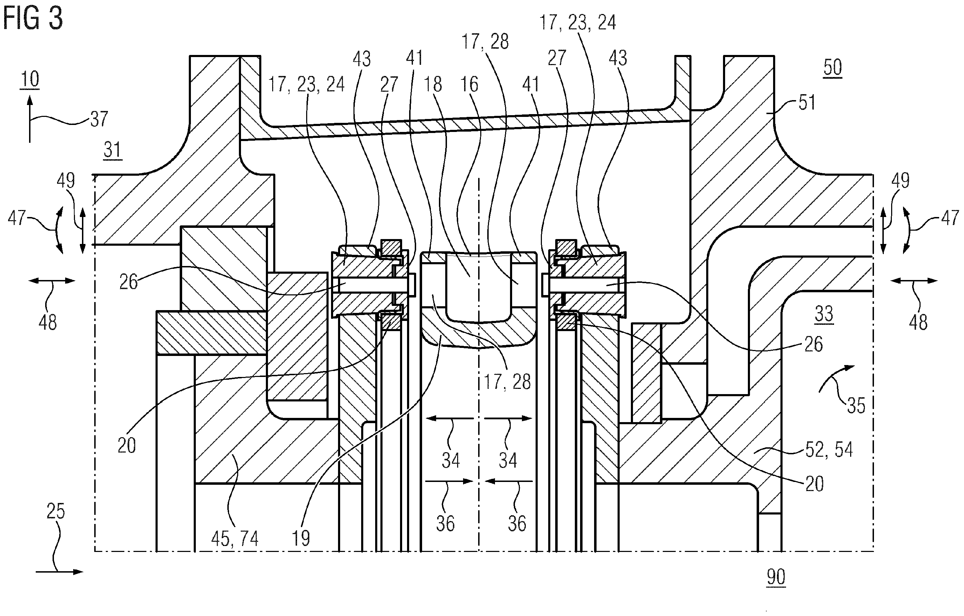

Die Ausführungsform der beanspruchten Kupplung 30 aus FIG 1 und FIG 2 ist in FIG 3 in einer Detailansicht in einem Längsschnitt dargestellt. FIG 3 unterscheidet sich von FIG 2 dabei in der Lage der Schnittebene, durch die der Längsschnitt erzeugt ist. FIG 3 zeigt, dass der antriebsseitige Anschlussflansch 42 und der abtriebsseitige Anschlussflansch 44 auch jeweils über Ausnehmungen 17, die dazu ausgebildet sind, zumindest abschnittsweise konisch ausgebildete Bolzen 23 aufzunehmen. Dazu sind die Ausnehmungen korrespondierend zu den zumindest abschnittsweise konischen Bolzen 23 ausgebildet. Die Bolzen 23 und die Ausnehmungen 17 im antriebsseitigen bzw. abtriebsseitigen Anschlussflansch 42, 44 sind dazu ausgebildet, dass die Befestigungsmittel 24, insbesondere der jeweilige Bolzen 23, in eine axial innere Richtung 36 montierbar ist. Im Bereich der Befestigungsmittel 24, die eine lösbare Verbindung zwischen dem antriebsseitigen bzw. abtriebsseitigen Anschlussflansch 42, 44 und dem jeweiligen Lamellenpaket 20 herstellen, weist der entsprechende antriebsseitige bzw. abtriebsseitige Flansch 12, 14 des Zwischenstücks 10 eine erste Wandstärke 41 auf, die geringer ist als eine zweite Wandstärke 43. Dementsprechend wird zwischen einem Bereich mit der ersten Wandstärke 41 am antriebsseitigen bzw. abtriesseitigen Anschlussflansch 42, 44 und dem jeweiligen Lamellenpaket 20 ein lichter Raum 21 ausgebildet, der eine einfache Montage eines Gegenstücks 27 zu einer Schraube 26 erlaubt, die in einer axial äußeren Richtung 34 in einen Bolzen 23 eingeschraubt ist. Am Zwischenstück 10 sind am antriebsseitigen und abtriebsseitigen Flansch 12, 14 Ausnehmungen 17 ausgebildet, die als Durchstecköffnungen 28 dienen. Die Ausnehmungen 17 sind in Bereichen des antriebsseitigen bzw. abtriebsseitigen Flansches 12, 14 ausgebildet, die die erste Wandstärke 41 aufweisen. Schrauben 26 sind zur Montage jeweils in Taschen 18 am Zwischenstück 10 aufnehmbar und durch die als Durchstecköffnung 28 dienenden Ausnehmungen 17 durchführbar und im entsprechenden Bolzen 23 aufnehmbar. Dadurch ist jeweils ein Gegenstück 27 gegen den entsprechenden Bolzen 23 spannbar, so dass durch das Gegenstück 27 das entsprechende Lamellenpaket 20 am antriebsseitigen bzw. abtriebsseitigen Anschlussflansch 42, 44 befestigbar ist. Auch hierdurch wird eine einfache und schnelle Montage der Kupplung 30 gewährleistet.

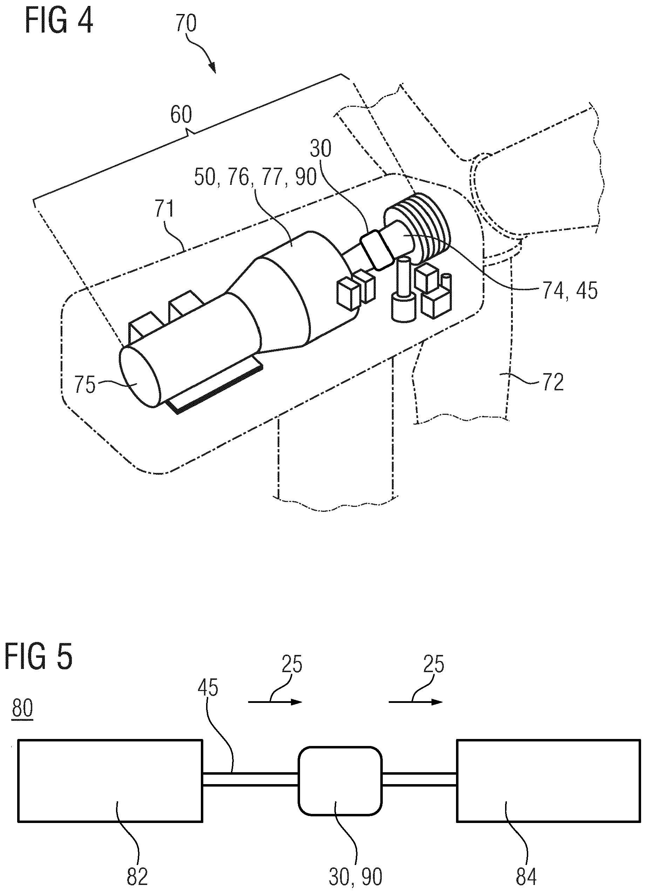

FIG 4 zeigt schematisch den Aufbau einer Ausführungsform der beanspruchten Windkraftanlage 70. Die Windkraftanlage 70 umfasst eine Gondel 71, an der drehbar ein Mehrblattrotor 72 angeordnet ist. Der Mehrblattrotor 72 ist drehmomentübertragend mit einer Rotorwelle 74 verbunden, die für eine Kupplung 30 als Eingangswelle 45 dient. Die Kupplung 30 wiederum ist drehmomentübertragend mit einem Getriebe 50 verbunden ist, das als Planetengetriebe 76 ausgebildet ist. Das Getriebe 50 wiederum ist drehmomentübertragend mit einem Generator 75 verbunden, wobei das Getriebe 50 und der Generator 75 integriert ausgebildet sind und zusammen ein Generatorgetriebe 77 bilden. Das Generatorgetriebe 77, die Kupplung 30 und die Rotorwelle 74 bilden zusammen eine Ausführungsform des beanspruchten Antriebsstrangs 60. Die Kupplung 30 ist in der beanspruchten Windkraftanlage 70 gemäß einer der oben skizzierten Ausführungsformen ausgebildet. Das Betriebsverhalten der Kupplung 30 ist mittels einer Ausführungsform des beanspruchten Computerprogrammprodukts 90 simulierbar, in dem die Kupplung 30 abgebildet ist.

In FIG 5 ist schematisch der Aufbau einer Ausführungsform der beanspruchten Industrie-Applikation 80 dargestellt. Die Industrie-Applikation 80 umfasst eine Antriebseinheit 82, durch die über eine Antriebswelle 45 eine Antriebsleistung 25 bereitgestellt wird. Die Antriebseinheit 82 ist mit einer Kupplung 30 drehmomentübertragend mit einer Abtriebseinheit 84 verbunden, durch die eine mechanische Anwendung verwirklicht wird. Die Kupplung 30 ist erfindungsgemäß nach einer der oben beschriebenen Ausführungsformen ausgebildet. Auch in der Industrie-Applikation 80 ist die Kupplung 30 in ihrem Betriebsverhalten mittels eines Computerprogrammprodukts 90 simulierbar, in dem die Kupplung 30 abgebildet ist.

## Patentansprüche

1. Kupplung (30) zum Anbinden eines Getriebes (50) an eine Antriebswelle (45), umfassend ein umlaufendes Zwischenstück (10) mit einem antriebsseitigen Flansch (12) und einem axial bewegungsfest mit dem antriebsseitigen Flansch (12) verbundenen abtriebsseitigen Flansch (14),
wobei der antriebsseitige Flansch (12) über Längsstege (16) mit dem abtriebsseitigen Flansch (14) verbunden ist,
wobei der Längssteg (16) einstückig mit dem antriebsseitigen Flansch (12) und mit dem abtriebsseitigen Flansch (14) ausgestaltet ist,
wobei der jeweilige Längssteg (16) einteilig oder zweiteilig ausgestaltet ist,
wobei der antriebsseitige und der abtriebsseitige Flansch (12,14) gegenüberliegende Ausnehmungen (17) zum Aufnehmen von lösbaren Befestigungsmitteln (24) aufweist
**dadurch gekennzeichnet, dass**
zumindest eines der Befestigungsmittel (24) einen zumindest abschnittsweise konischen Bolzen (23) umfasst.

2. Kupplung (30) nach Anspruch 1, **dadurch gekennzeichnet, dass** der Längssteg (16) oder ein antriebsseitiger Teil des Längsstegs (16) an einer auf den abtriebsseitigen Flansch (14) zu weisenden antriebsseitigen Flanschseite des antriebsseitigen Flanschs (12) über in Umfangsrichtung verlaufende Übergangsrundungen in den antriebsseitigen Flansch (12) übergeht und/oder der Längssteg (16) oder ein abtriebsseitiger Teil des Längsstegs (16) an einer auf den antriebsseitigen Flansch (12) zu weisenden abtriebsseitigen Flanschseite des abtriebsseitigen Flanschs (14) über in Umfangsrichtung verlaufende Übergangsrundungen in den abtriebsseitigen Flansch (14) übergeht.

3. Kupplung (30) nach Anspruch 1 oder 2, **dadurch gekennzeichnet, dass** der Längssteg (16) radial außen im Wesentlichen absatzlos in den antriebsseitigen Flansch (12) und/oder in den abtriebsseitigen Flanschs (14) übergeht.

4. Kupplung (30) nach einem der Ansprüche 1 bis 3, **dadurch gekennzeichnet, dass** ein umlaufender Grundkörper (19) des Zwischenstücks (10), der antriebsseitige und der abtriebsseitige Flansch (12,14) und Längsstege (16) in eine radial äußere Richtung (37) offene Taschen (18) bilden.

5. Kupplung (30) nach einem der Ansprüche 1 bis 4, **dadurch gekennzeichnet, dass** der antriebsseitige und/oder abtriebsseitige Flansch (12,14) jeweils mit einem Lamellenpaket (20) verbunden ist.

6. Kupplung (30) nach einem der Ansprüche 1 bis Anspruch 5, **dadurch gekennzeichnet, dass** der zumindest abschnittsweise konische Bolzen (23) in eine axial äußere Richtung (34) montierbar ist.

7. Kupplung (30) nach einem der Ansprüche 1 bis 6, **dadurch gekennzeichnet, dass** die Kupplung (30) einen antriebsseitigen und/oder abtriebsseitigen Anschlussflansch (42,44) aufweist, der drehmomentübertragend mit dem Zwischenstück (10) verbunden ist.

8. Kupplung (30) nach Anspruch 7, **dadurch gekennzeichnet, dass** der antriebsseitige und/oder abtriebsseitige Anschlussflansch (42, 44) umlaufend alternierend Abschnitte mit einer ersten Wandstärke (41) und einer zweiten Wandstärke (43) aufweist, wobei die erste Wandstärke (41) geringer ist als die zweite Wandstärke (43).

9. Kupplung (30) nach einem der Ansprüche 1 bis 8, **dadurch gekennzeichnet, dass** die Kupplung (30) eine Torsionssteifigkeit von 1200MNm/rad bis 2200MNm/rad, vorzugsweise von 1500MNm/rad bis 1800MNm/rad aufweist.

10. Antriebsstrang (60) für eine Windkraftanlage (70), umfassend eine Rotorwelle (74), einen Generator (75), ein Getriebe (50) und eine Kupplung (30), über die die Rotorwelle (74) drehmomentübertragend mit dem Getriebe (50) verbunden ist, **dadurch gekennzeichnet, dass** die Kupplung (30) nach einem der Ansprüche 1 bis 9 ausgebildet ist.

11. Windkraftanlage (70), umfassend einen Mehrblattrotor (72), der drehbar an einer Gondel (71) angeordnet ist und drehmomentübertragend mit einer Rotorwelle (74) verbunden ist, die zu einem Antriebsstrang (60) gehört, **dadurch gekennzeichnet, dass** der Antriebsstrang (60) nach Anspruch 10 ausgebildet ist.

12. Industrie-Applikation (80), umfassend eine Antriebseinheit (82) und eine Abtriebseinheit (84), die über eine Kupplung (30) drehmomentübertragend miteinander verbunden sind, **dadurch gekennzeichnet, dass** die Kupplung (30) nach einem der Ansprüche 1 bis 9 ausgebildet ist.

## Claims

1. Coupling (30) for attaching a transmission (50) to a drive shaft (45), comprising a revolving intermediate piece (10) with a drive-side flange (12) and an output-side flange (14) which is connected axially immovably to the drive-side flange (12),
the drive-side flange (12) being connected via longitudinal webs (16) to the output-side flange (14), the longitudinal web (16) being configured in one piece with the drive-side flange (12) and with the output-side flange (14),
the respective longitudinal web (16) being configured in one part or in two parts,
the drive-side and the output-side flange (12, 14) having opposite recesses (17) for receiving releasable fastening means (24),
**characterized in that**
at least one of the fastening means (24) comprises a pin (23), at least portions of which are conical.

2. Coupling (30) according to Claim 1, **characterized in that** the longitudinal web (16) or a drive-side part of the longitudinal web (16) merges, on a drive-side flange side of the drive-side flange (12) which points towards the output-side flange (14), via rounded transitional portions which run in the circumferential direction into the drive-side flange (12), and/or the longitudinal web (16) or an output-side part of the longitudinal web (16) merges, on an output-side flange side of the output-side flange (14) which points towards the drive-side flange (12), via rounded transitional portions which run in the circumferential direction into the output-side flange (14).

3. Coupling (30) according to Claim 1 or 2, **characterized in that** the longitudinal web (16) merges radially on the outside substantially without a step into the drive-side flange (12) and/or into the output-side flange (14).

4. Coupling (30) according to one of Claims 1 to 3, **characterized in that** a circumferential main body (19) of the intermediate piece (10), the drive-side and the output-side flange (12, 14) and longitudinal webs (16) form pockets (18) which are open in a radially outer direction (37).

5. Coupling (30) according to one of Claims 1 to 4, **characterized in that** the drive-side and/or output-side flange (12, 14) is connected in each case to a multiple disc assembly (20).

6. Coupling (30) according to one of Claim 1 to Claim 5, **characterized in that** the pin (23), at least portions of which are conical, can be mounted in an axially outer direction (34).

7. Coupling (30) according to one of Claims 1 to 6, **characterized in that** the coupling (30) has a drive-side and/or output-side connector flange (42, 44) which is connected in a torque-transmitting manner to the intermediate piece (10).

8. Coupling (30) according to Claim 7, **characterized in that** the drive-side and/or output-side connector flange (42, 44) has, in a manner which alternates circumferentially, portions with a first wall thickness (41) and a second wall thickness (43), the first wall thickness (41) being lower than the second wall thickness (43) .

9. Coupling (30) according to one of Claims 1 to 8, **characterized in that** the coupling (30) has a torsional rigidity of from 1200 MNm/rad to 2200 MNm/rad, preferably of from 1500 MNm/rad to 1800 MNm/rad.

10. Drive train (60) for a wind power plant (70), comprising a rotor shaft (74), a generator (75), a transmission (50) and a coupling (30), via which the rotor shaft (74) is connected in a torque-transmitting manner to the transmission (50), **characterized in that** the coupling (30) is configured according to one of Claims 1 to 9.

11. Wind power plant (70), comprising a multiple-blade rotor (72) which is arranged rotatably on a nacelle (71) and is connected in a torque-transmitting manner to a rotor shaft (74) which belongs to a drive train (60), **characterized in that** the drive train (60) is configured according to Claim 10.

12. Industrial application (80), comprising a drive unit (82) and an output unit (84) which are connected to one another in a torque-transmitting manner via a coupling (30), **characterized in that** the coupling (30) is configured according to one of Claims 1 to 9.

## Revendications

1. Embrayage (30) pour relier une transmission (50) à un arbre d'entraînement (45), comprenant une pièce intermédiaire circonférentielle (10) avec un flasque (12) côté entrée d'entraînement et un flasque (14) côté sortie d'entraînement relié de manière axialement fixé au flasque côté entrée (12),
le flasque côté entrée (12) étant relié par des barrettes longitudinales (16) au flasque côté sortie (14),
la barrette longitudinale (16) étant réalisée d'une seule pièce avec le flasque côté entrée (12) et avec le flasque côté sortie (14),
la barrette longitudinale (16) respective étant réalisée d'une seule pièce ou en deux parties,
le flasque côté entrée et le flasque côté sortie (12, 14) présentant des évidements (17) opposés destinés à recevoir des moyens de fixation amovibles (24),
**caractérisé en ce que**
au moins un des moyens de fixation (24) comprend un boulon (23) au moins partiellement conique.

2. Embrayage (30) selon la revendication 1, **caractérisé en ce que** la barrette longitudinale (16) ou une partie côté entrée de la barrette longitudinale (16) se fond dans le flasque côté entrée (12) sur un côté entrée de le flasque côté entrée (12) orienté vers le flasque côté sortie (14) par des arrondis de transition s'étendant dans la direction circonférentielle, et/ou la barrette longitudinale (16) ou une partie côté sortie de la barrette longitudinale (16) se fond dans le flasque côté sortie (14) sur un côté sortie de le flasque côté sortie (14) orienté vers le flasque côté entrée (12) par des arrondis de transition s'étendant dans la direction périphérique.

3. Embrayage (30) selon la revendication 1 ou la revendication 2, **caractérisé en ce que** la barrette longitudinale (16) se fond radialement vers l'extérieur sensiblement sans décrochement dans le flasque côté entrée (12) et/ou dans le flasque côté sortie (14).

4. Embrayage (30) selon l'une des revendications 1 à 3, **caractérisé en ce qu'**un corps de base circonférentiel (19) de la pièce intermédiaire (10), le flasque côté entrée et le flasque côté sortie (12, 14) et des barrettes longitudinales (16) forment des poches (18) ouvertes dans une direction radialement extérieure (37).

5. Embrayage (30) selon l'une des revendications 1 à 4, **caractérisé en ce que** chaque flasque côté entrée et/ou côté sortie (12, 14) est relié à un paquet de lamelles (20) .

6. Embrayage (30) selon l'une des revendications 1 à la revendication 5, **caractérisé en ce que** le boulon (23) au moins partiellement conique est apte à être monté dans une direction axialement extérieure (34).

7. Embrayage (30) selon l'une des revendications 1 à 6, **caractérisé en ce que** la liaison (30) présente un flasque de raccordement (42, 44) côté entrée et/ou côté sortie, qui est relié à la pièce intermédiaire (10) de manière à transmettre le couple.

8. Embrayage (30) selon la revendication 7, **caractérisé en ce que** le flasque de raccordement (42, 44) côté entrée et/ou côté sortie présente, en alternance sur son pourtour, des sections ayant une première épaisseur de paroi (41) et une deuxième épaisseur de paroi (43), la première épaisseur de paroi (41) étant inférieure à la deuxième épaisseur de paroi (43).

9. Embrayage (30) selon l'une des revendications 1 à 8, **caractérisé en ce que** l'embrayage (30) présente une rigidité en torsion de 1200MNm/rad à 2200MNm/rad, de préférence de 1500MNm/rad à 1800MNm/rad.

10. Chaîne cinématique (60) pour une éolienne (70), comprenant un arbre de rotor (74), un générateur (75), une transmission (50) et un embrayage (30) par lequel l'arbre de rotor (74) est relié à la transmission (50) en transmettant le couple, **caractérisée en ce que** l'embrayage (30) est conçu selon l'une des revendications 1 à 9.

11. Éolienne (70) comprenant un rotor multipale (72) monté rotatif sur une nacelle (71) et relié en transmission de couple à un arbre de rotor (74) appartenant à une chaîne cinématique (60), **caractérisée en ce que** la chaîne cinématique (60) est conçue selon la revendication 10.

12. Application industrielle (80), comprenant une unité (82) d'entrée d'entraînement et une unité (84) de sortie d'entraînement, qui sont reliées l'une à l'autre par un embrayage (30) de manière à transmettre le couple, **caractérisée en ce que** l'embrayage (30) est conçu selon l'une des revendications 1 à 9.
